# EUROPÄISCHE PATENTSCHRIFT

(11) **EP 1 609 689 B1**
(45) Veröffentlichungstag und Bekanntmachung des Hinweises auf die Patenterteilung: **06.01.2010**
(21) Anmeldenummer: 05103625.9
(22) Anmeldetag: 02.05.2005
(51) Int. Cl.: B60T 8/32, B60T 7/22

(54) **Bremsassistent für Kraftfahrzeuge**
Brake assistant for motor vehicles
Assistant de freinage destiné à des véhicules automobiles

(30) Priorität: 26.06.2004 DE 102004030994
(43) Veröffentlichungstag der Anmeldung: 28.12.2005
(73) Patentinhaber: ROBERT BOSCH GMBH, 70442 Stuttgart (DE)
(72) Erfinder: MEISTER, Dirk, 71696, Moeglingen (DE); THIELE, Joachim, 71717, Beilstein (DE); OECHSLE, Fred, 71642, Ludwigsburg (DE); WILHELM, Ulf, 71277, DE (DE)

(56) Entgegenhaltungen:
- EP-A- 0 976 627
- WO-A-2004/085220
- DE-A1- 10 124 591

## Beschreibung

### Stand der Technik

Die Erfindung betrifft einen Bremsassistenten für Kraftfahrzeuge, mit einer Steuereinrichtung zur Steuerung der Bremskraft, einem Bremskraftfühler und einer Bewertungseinrichtung, die Signale einer Umfeldsensorik aufnimmt und eine Auslösefunktion zur Einleitung einer Notbremsung in Abhängigkeit von der Verkehrsitation aufweist.

Bremsassistenten dienen dazu, den Fahrer eines Kraftfahrzeugs bei der Einleitung und Durchführung von Bremsvorgängen zu unterstützen. Kraftfahrzeuge sind heute zumeist mit einem ABS-System (Antiblockiersystem) ausgerüstet, das bei einem Bremsvorgang dazu dient, bei einem Blockieren der Räder automatisch den Bremsdruck zu modulieren, so daß eine optimale Haftung der Reifen auf der Fahrbahn erhalten bleibt und das Fahrzeug auch während einer Vollbremsung lenkbar bleibt. Auch bei Fahrzeugen mit einem solchen Antiblockiersystem wird jedoch im Fall einer Notbremsung aus verschiedenen Gründen oft nicht der kleinstmögliche Anhalteweg erreicht. Einer dieser Gründe besteht darin, daß die Bremsbacken bei unbetätigter Bremse einen gewissen Abstand zur Bremsscheibe oder zur Bremstrommel aufweisen, so daß eine gewisse Zeit vergeht, bevor die Bremsbacken ihre Bremswirkung entfalten. Dies führt zu einer Verlängerung des Anhalteweges. Ein weiterer Grund besteht darin, daß die meisten Kraftfahrer auch bei einer Notbremsung intuitiv dazu neigen, das Bremspedal zu zaghaft zu betätigen. Richtig wäre es statt dessen, bei einer Notbremsung einen sogenannten "Bremsschlag" auszuführen, d. h., das Bremspedal schlagartig bis zum Anschlag zu betätigen, bis das Antiblockiersystem in Funktion tritt. Bei fehlerhaftem Bremsverhalten des Fahrers baut sich der Bremsdruck langsamer auf als es möglich und wünschenswert wäre. Weitere häufige Unfallursachen sind falsch eingeschätzte Abstände und Relativgeschwindigkeiten.

Eine bekannte Maßnahme zur Verkürzung des Anhalteweges ist die sogenannte Prefill-Funktion, bei der ein geringer Druck in die Bremsanlage eingespeist wird, so daß sich die Bremsbacken bereits an die Bremsscheibe oder die Bremstrommel anlegen, ohne daß dies bereits eine merkliche Verzögerungswirkung hat. Wenn dann die Notbremsung ausgelöst wird, tritt die erwünschte Bremswirkung unverzüglich ein.

Weiterhin sind hydraulische Bremsassistenten bekannt, bei denen, wenn anhand des Ausmaßes und/oder der Geschwindigkeit der Bremspedalbetätigung ein Notbremswunsch des Fahrers erkannt wird, automatisch der für eine optimale Vollbremsung notwendige Bremsdruck in die Bremsanlage eingespeist wird, um den fehlenden "Bremsschlag" auszugleichen.

Bei diesen bekannten Systemen wird der Notbremswunsch des Fahrers allein aus der Pedalbetätigung abgeleitet.

Andererseits sind sogenannte ACC-Systeme (Adaptive Cruise Control) bekannt, die beispielsweise bei Autobahnfahrten eine automatische Anpassung der Geschwindigkeit des eigenen Fahrzeugs an die Geschwindigkeit eines vorausfahrenden Fahrzeugs ermöglichen. Dabei wird mit Hilfe einer Umfeldsensorik, beispielsweise mit Hilfe eines vorn im Fahrzeug eingebauten Radarsensors oder mit Hilfe eines Viedeosystems und elektronischer Bildauswertung das Verkehrsumfeld erfaßt.

Es ist auch bereits bekannt, bei solchen ACC-Systemen zusätzlich eine Kollisionsverhinderungs- oder Kollisionsmilderungsfunktion zu implementieren, die anhand der Daten der Umfeldsensorik eine drohende Kollisionsgefahr erkennt und dann automatisch eine Notbremsung einleitet. Zum Beispiel beschreibt DE 36 37 165 A1 ein System der eingangs genannten Art, bei dem in Abhängigkeit von der Kollisionsgefahr in mehreren Stufen automatisch immer ernergischere Maßnahmen eingeleitet werden, von einem Warnhinweis an den Fahrer über einen moderaten Bremsvorgang bis hin zu einer Notbremsung. Dabei erweist sich jedoch eine zutreffende Bewertung des Verkehrsumfeldes in der Praxis als schwierig. Außerdem sind diese Systeme in der Regel so ausgebildet, daß sie bei Betätigung des Bremspedals durch den Fahrer deaktiviert werden. Die Funktion steht daher nicht mehr zur Verfügung, wenn der Fahrer selbst den Bremsvorgang einleitet aber die Bremse nicht heftig genug betätigt.

Aus der EP 0 976 627 A ist ein Bremssteuer-/Regelsystem für ein Fahrzeug bekannt, das ein Objekterfassungssystem zum Erfassen eines Objekts, das sich in der Bewegungsrichtung des Fahrzeugs vor dem Fahrzeug befindet, eine Bremsvorrichtung, ein Mittel zum Bestimmen der Möglichkeit eines Kontakts des Fahrzeugs mit dem Objekt aus der relativen Positionsbeziehung zwischen dem Fahrzeug und dem Objekt auf der Basis des Ergebnisses der durch die Objekterfassungsvor-richtung durchgeführten Erfassung, ein automatisches Bremsmittel zum Betätigen der Bremsvorrichtung auf der Basis des Ergebnisses der durch das Bestimmungsmittel durchgeführten Bestimmung zur Ausführung eines automatischen Bremsbetriebs, und ein Bremswunscherfassungsmittel zum Erfassen eines Bremswunsches des Fahrers, wobei das automatische Bremsmittel die vom Fahrer durchgeführte Bremsbetätigung unterstützt, wenn während des vom automatischen Bremsmittel ausgeführten automatischen Bremsbetriebs der Bremswunsch des Fahrers durch das Bremswunscherfassungsmittel erfasst wird.

Aus der DE 101 24 591 A1 ist ein Verfahren bekannt, bei dem wenn ein Fahrerwunsch nach maximaler Verzögerung bzw. eine kritische Fahrsituation erkannt wird, die Bremskraft nach Maßgabe einer Pedalweg-Bremskraft-Kennlinie mit einem maximalen Verstärkungsfaktor geregelt wird und die für eine maximale Fahrzeugverzögerung benötigte Bremskraft um einen Überhöhungswert erhöht wird und wenn anschließend ein Fahrerwunsch nach einer Verringerung der Verzögerung erkannt wird, die Bremskraft nach Maßgabe einer Pedalweg-Bremskraft-Kennlinie mit einem mittleren Verstärkungsfaktor geregelt wird, und wenn anschließend ein Fahrerwunsch nach stärkerer Verzögerung erkannt wird, die Bremskraft nach Maßgabe einer überleitenden Pedalweg-Bremskraft-Kennlinie geregelt wird.

Aus der nicht vorveröffentlichten WO 2004/085220 A ist ein Verfahren zum Ermitteln mindestens eines, vom Fahrer unabhängigen Eingriffs in ein Fahrzeugsystem bekannt, mit einem Gefahrenrechner, dessen Eingang vorgegebene Fahrzeugdaten, Umfelddaten, aktuelle Fahrzeug- und Fahrerdaten, Personendaten innerhalb und außerhalb des Fahrzeugs und dgl. zugeführt werden, aufgrund denen der Gefahrenrechner eine Bewertung der Gefahrenlage des Fahrzeugs und der im und außerhalb des Fahrzeugs vorhandenen Personen vornimmt und in Abhängigkeit von der Bewertung und ggf. weiterer Kriterien oder Gewichtungen Ansteuersignale ausgibt, die Aktuatoren steuern, die das Fahrverhalten des Fahrzeugs und/oder den Insassenschutz und/oder Schutzmittel für weitere Verkehrsteilnehmer derart ändern oder auslösen, dass eine maximale Schutzwirkung für die Personen und das Fahrzeug nach einer Prioritätsschaltung erreicht wird.

### Vorteile der Erfindung

Durch die Erfindung mit den in Anspruch 1 angegebenen Merkmalen wird ein Bremsassistent geschaffen, der auch bei einem Fehlverhalten des Fahrers eine wirksame Notbremsung ermöglicht.

Zu diesem Zweck ist erfindungsgemäß vorgesehen, daß die Auslösefunktion auch bei durch den Fahrer betätigter Bremse aktiv ist und, wenn eine Kollisionsgefahr erkannt wird, die Bremsbefehle des Fahrers übersteuert und die Notbremsung auslöst.

So wird der Fahrer, wenn er den Bremsweg unterschätzt hat, aktiv unterstützt, ohne daß der bei der Bremsung heftiger auf das Bremspedal treten muß, um den hydraulischen Bremsassistenten zu aktivieren.

Vorteilhafte Ausgestaltungen und Weiterbildungen der Erfindung ergeben sich aus den Unteransprüchen.

Bei der Notbremsung kann die maximale Verzögerung so lange erhalten bleiben, wie der Fahrer selbst bremst oder bis sich die Verkehrssituation entspannt hat.

Bevorzugt weist der Bremsassistent zusätzlich eine Erkennungsfunktion auf, die anhand der Bremsbetätigung einen Notbremswunsch des Fahrers erkennt. Die Erkennungsschwelle kann dabei abhängig von der Verkehrssituation herabgesetzt werden.

Die Umfeldsensorik kann z. B., wie bei bekannten ACC-Systemen, durch ein winkelauflösendes Radarsystem gebildet werden. Alternativ oder zusätzlich können auch Lidar-Sensoren und/oder monokulare oder binokulare Kamerasysteme mit zugehöriger Bildverarbeitungselektronik als Umfeldsensorik eingesetzt werden. Radarsysteme bieten den Vorteil, daß sie nicht nur eine Abstandsmessung, sondern auch eine direkte Messung der Relativgeschwindigkeiten ermöglichen.

Generell sollte die Umfeldsensorik in der Lage sein, die Abstände und auch die Querversätze von vor dem eigenen Fahrzeug befindlichen Objekten zu messen. Bei diesen Objekten wird es sich in erster Linie um vorausfahrende Fahrzeuge handeln, nicht nur um solche auf der eigenen Fahrspur, sondern auch um solche auf Nebenspuren. Unter Umständen, beispielsweise bei Fahrten mit niedriger Geschwindigkeit, können auch stehende Objekte in die Auswertung einbezogen werden.

In einer bevorzugten Ausführungsform wird aus den von der Umfeldsensorik bereitgestellten Daten eine Notbremswahrscheinlichkeit berechnet, und die zur Steuerung des Bremsdruckes dienende Steuereinrichtung wird in Abhängigkeit von dieser Notbremswahrscheinlichlkeit konfiguriert. Die Konfiguration kann z. B. darin bestehen, daß bei hoher Notbremswahrscheinlichkeit eine Prefill-Funktion ausgelöst wird, um den Abstand zwischen den Bremsbacken und der Bremsscheibe oder Bremstrommel zu verringern, vorzugsweise bis auf Null. Diese Prefill-Funktion kann bereits bei der ersten, noch so geringfügigen Betätigung des Bremspedals ausgelöst werden oder gegebenenfalls auch vorausschauend, bevor der Fahrer überhaupt das Bremspedal betätigt.

Ergänzend oder zusätzlich kann bei der Konfiguration auch die Auslöseschwelle für einen "Bremsschlag" des hydraulischen Bremsassistenten in Abhängigkeit von der Notbremswahrscheinlichkeit herabgesetzt werden. Beispielsweise wird der Bremsschlag ausgelöst, wenn das Ausmaß der Bremspedalbetätigung einen bestimmten Schwellenwert überschreitet oder wenn die Geschwindigkeit, mit der das Bremspedal betätigt wird, einen bestimmten Schwellenwert überschreitet oder wenn eine geeignete Kombination dieser beiden Bedingungen gegeben ist. Je höher die Notbremswahrscheinlichkeit ist, desto niedriger werden die betreffenden Schwellenwerte gewählt, so daß der Bremsschlag entsprechend früher eingeleitet wird. Im Extremfall wird die Notbremsung bei akuter Kollisionsgefahr automatisch ausgelöst, ohne daß es noch auf die Erkennung eines Notbremswunsches des Fahrers ankommt.

Zur Berechnung der Notbremswahrscheinlichkeit wird z. B. zunächst das Konfliktpotential jedes georteten Objektes bewertet. Dazu wird z. B. anhand der Abstands- und Relativgeschwindigkeitsdaten die sogenannte Vermeidungsbeschleunigung berechnet. Unter der (negativen) Vermeidungsbeschleunigung versteht man die Bremsverzögerung, die, wenn sich das Objekt auf der Fahrtrajektorie des eigenen Fahrzeugs befände, notwendig wäre, um eine Kollision zu vermeiden. Je größer die so berechnete Bremsverzögerung ist, desto größer ist das Konfliktpotential des betreffenden Objekts.

Weiterhin wird für jedes Objekt anhand der Ortungsdaten der Querversatz berechnet. Bei geradliniger Fahrbahn ist dieser Querversatz durch die seitliche Ablage des Objektes von der gedachten Graden gegeben, die in Fahrtrichtung durch die Mitte des eigenen Fahrzeugs verläuft. Bei gekrümmter Fahrbahn ist die Krümmung der voraussichtlichen Fahrtrajektorie des eigenen Fahrzeugs zu berücksichtigen. Verfahren zur Kursprädiktion, mit denen diese Krümmung bestimmt wird, sind bekannt und werden bei bestehenden ACC-Systemen bereits eingesetzt.

### Zeichnung

Ein Ausführungsbeispiel der Erfindung ist in den Zeichnungen dargestellt und in der nachfolgenden Beschreibung näher erläutert.

Es zeigen:
- Figur 1: ein Blockdiagramm des Bremsassistenten; und
- Figur 2: ein Flußdiagramm zur Erläuterung der Funktionsweise.

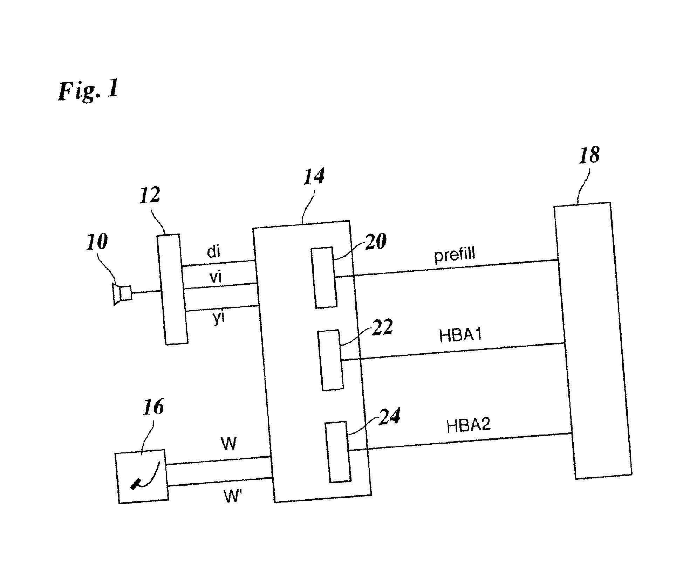

In Figur 1 sind die wesentlichen Elemente des Bremsassistenten in einem Blockdiagramm dargestellt. Einer Umfeldsensorik 10, z. B. einem Radarsensor, ist eine Auswerteeinrichtung 12 zugeordnet, die anhand der Ortungsdaten des Radarsensors die Abstände di, die Relativgeschwindigkeiten vi und die Querversätze yi aller georteten Objekte i berechnet und an eine Bewertungseinrichtung 14 des Bremsassistenten übermittelt. Ein Bremskraftfühler 16 mißt den Druck und den Druckgradienten im Hauptbremszylinder und liefert der Bewertungseinrichtung 14 Signale, die die Bremsaktionen des Fahrers repräsentieren, z. B. den Pedalweg W des Bremspedals sowie dessen zeitliche Ableitung W', also die Geschwindigkeit, mit der das Bremspedal betätigt wird.

Eine Steuereinrichtung 18 dient zur fahrerunabhängigen Steureung des Bremsdruckes entsprechend Befehlen der Bewertungseinrichtung 14. In der Steuereinrichtung 18 ist eine Prefill-Funktion implementiert, mit der auf einen von der Bewertungseinrichtung 14 erhaltenen Befehl "prefill" der hydraulische Druck in der Bremsanlage so weit erhöht wird, daß die Bremsbacken gegen die Bremsscheiben oder Bremstrommeln angestellt werden, ohne jedoch eine nennenswerte Bremsverzögerung auszuüben. Weiterhin hat die Steuereinrichtung 18 die Funktionalität eines hydraulischen Bremsassistenten, der auf einen Befehl "HBA1" oder "HBA2" von der Bewertungseinrichtung 14 den Bremsdruck im System schlagartig erhöht, um im Fall einer Notbremsung schnellstmöglich den maximalen Bremsdruck aufzubauen.

Die Bewertungseinrichtung 24 erzeugt die Befehle "prefill" und "HBA1" in Abhängigkeit von den Signalen, die sie von der Auswerteeinrichtung 12 und vom Bremskraftfühler 16 erhält. Anhand der Signale di, vi und yi berechnet die Bewertungseinrichtung 14 das Konfliktpotential jedes georteten Objekts.

Aus der Gesamtheit der Konfliktpotentiale aller Objekte berechnet ein Prefill-Modul 20 der Bewertungseinrichtung 14 eine Prefill-Notbremswahrscheinlichkeit. Wenn diese Wahrscheinlichkeit oberhalb eines vorgegebenen Schwellenwertes liegt, wird der Befehl "prefill" ausgegeben. Auf diese Weise wird das Bremssystem immer dann vorbeugend auf einen Notbremsvorgang vorbereitet, wenn eine hinreichend hohe Prefill-Notbremswahrscheinlichkeit besteht.

Weiterhin berechnet ein Erkennungsmodul 22 der Bewertungseinrichtung 14 eine Wahrscheinlichkeit für einen Notbremswunsch des Fahrers. Diese Wahrscheinlichkeit führt nicht unmittelbar zur Ausgabe des Befehls HBA1, sondern vielmehr wird der Befehl HBA1 dann ausgegeben, wenn der Pedalweg W und/oder dessen zeitliche Ableitung W' oberhalb eines jeweils zugehörigen Schwellenwertes liegt. Diese Schwellenwerte werden durch das Erkennungsmodul 22 in Abhängigkeit von der Notbremswunschwahrscheinlichkeit variiert, so daß die Schwelle für den Bremsschlag um so niedriger wird, je höher die Notbremswunschwahrscheinlichkeit ist. Auf diese Weise kann bei hoher Notbremswunschwahrscheinlichkeit eine rasche und effiziente Notbremsung mit schnellem Bremsdruckaufbau eingeleitet werden, während andererseits bei geringer Notbremswunschwahrscheinlichkeit für den Fahrer ausreichend Spielraum für eine moderate Teilbremsung verbleibt.

Die Bewertungseinrichtung 14 weist weiterhin ein Auslösemodul 24 auf, mit dem ebenfalls ein Befehl HBA2 für eine Notbremsung ausgelöst werden kann. Anders als das Erkennungsmodul 22 stellt jedoch das Auslösemodul 24 nicht darauf ab, ob in der konkreten Verkehrssituation ein Notbremswunsch des Fahrers anzunehmen ist oder nicht, sondern vielmehr wird das Auslösemodul 24 dann aktiv, wenn sich aus den Daten der Umfeldsensorik eine akute Kollisionsgefahr ergibt. Das Auslösemodul 24 prüft dann, ob die vom Fahrer selbst vorgenommene Bremsaktion ausreichen wird, die Kollision zu vermeiden. Wenn dies nicht der Fall ist, wird durch den Befehl HBA2 die Notbremsung ausgelöst. Dieses Modul dient also nicht dazu, den vermutlichen Wunsch des Fahrers zu erkennen, sondern vielmehr dazu, ein Fehlverhalten des Fahrers zu korrigieren. Voraussetzung für die Aktivierung des Auslösemoduls 24 ist jedoch, daß der Fahrer überhaupt, wenn auch zu schwach, das Bremspedal betätigt. Da der Bremsvorgang bereits durch den Fahrer eingeleitet wurde, ist der Nachfolgeverkehr schon durch das Aufleuchten der Bremslichter gewarnt worden. Somit sind die nachteiligen Konsequenzen von etwaigen Fehlauslösungen deutlich reduziert.

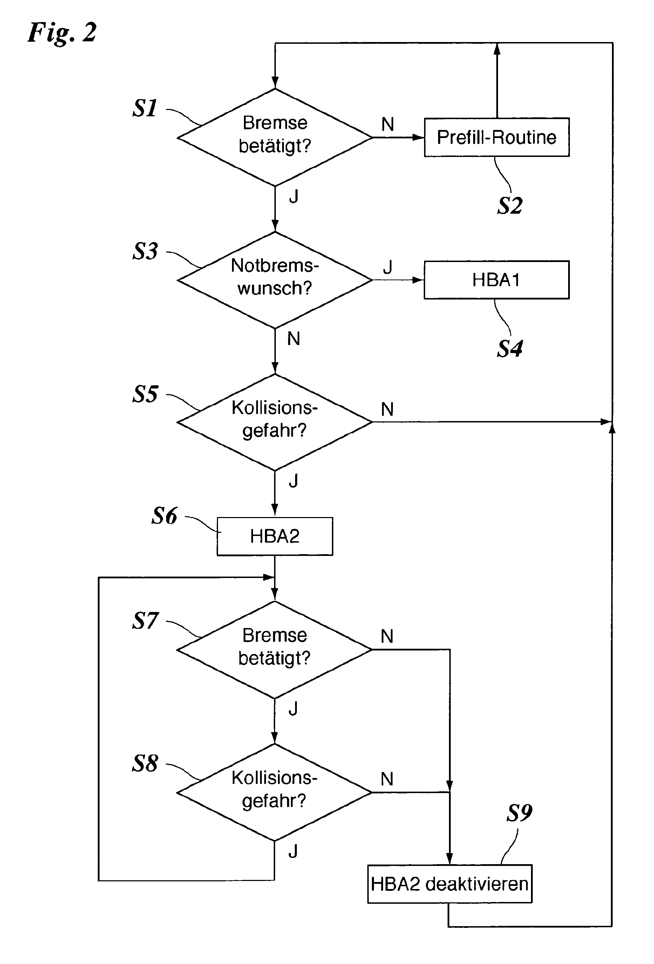

Die Arbeitsweise der Betätigungseinrichtung 14 und speziell des Auslösemoduls 24 soll nun anhand des Flußdiagramms in Figur 2 näher erläutert werden.

In Schritt S1 wird geprüft, ob der Fahrer das Bremspedal betätigt hat. Wenn dies nicht der Fall ist, wird in Schritt S2 das Prefill-Modul 20 veranlaßt, zu prüfen, ob angesichts der Verkehrssituation ein Prefill-Vorgang notwendig ist. Danach erfolgt ein Rücksprung zu Schritt S1.

Wenn in Schritt S1 festgestellt wird, daß die Bremse betätigt wurde, so wird in Schritt S3 geprüft, ob die Art der Bremspedalbetätigung in Verbindung mit der aktuellen Verkehrssituation auf einen Notbremswunsch des Fahrers schließen läßt. Wenn dies der Fall ist, wird in Schritt S4 der Befehl HBA1 für eine Notbremsung ausgegeben. Andernfalls wird in Schritt S5 geprüft, ob trotz der Bremsbetätigung durch den Fahrer eine akute Kollisionsgefahr besteht. Wenn dies nicht der Fall ist, erfolgt ein Rücksprung zu Schritt S1. Andernfalls wird in Schritt S6 der Befehl HBA2 für eine Notbremsung ausgegeben, und das Fahrzeug wird mit maximaler Bremsverfügung gebremst, um die Kollision abzuwenden. In Schritt S7 wird dann erneut geprüft, ob der Fahrer das Bremspedal weiterhin betätigt hält. Wenn dies der Fall ist, wird in Schritt S8 geprüft, ob die Kollisionsgefahr weiterhin besteht. Ist auch dies der Fall, werden die Schritte S7 und S8 in einer Schleife wiederholt. Wenn der Fahrer das Bremspedal losläßt oder die Kollisionsgefahr beseitigt ist, wird in Schritt S9 der Befehl HBA2 deaktiviert, d. h., die Notbremsung wird abgebrochen. Danach erfolgt ein Rücksprung zu Schritt S1.

## Patentansprüche

1. Bremsassistent für Kraftfahrzeuge, mit einer Steuereinrichtung (18) zur Steuerung der Bremskraft, einem Bremskraftfühler (16) und einer Bewertungseinrichtung (14), die Signale einer Umfeldsensorik (10) aufnimmt und eine Auslösefunktion (24) zur Einleitung einer Notbremsung in Abhängigkeit von der Verkehrsitation aufweist, wobei, die Auslösefunktion (24) nur bei vom Fahrer betätigter Bremse aktiv ist und die Auslösefunktion (24) dazu ausgebildet ist, anhand der Daten der Umfeldsensorik zu prüfen, ob das Ausmaß der Betätigung der Bremse durch den Fahrer ausreichend ist, die bevorstehende Kollision abzuwenden und wenn eine Kollisionsgefahr erkannt wird, die Bremsbefehle des Fahrers übersteuert und die Notbremsung auslöst, **dadurch gekennzeichnet, daß** die Auslösefunktion (24) dazu ausgebildet ist, die Notbremsung abzubrechen, wenn der Fahrer das Bremspedal losläßt.

2. Bremsassistent nach Anspruch 1, **gekennzeichnet durch** eine Erkennungseinrichtung (22), die dazu ausgebildet ist, in Abhängigkeit vom Ausmaß der Bremsbetätigung **durch** den Fahrer und unter Berücksichtigung der von der Umfeldsensorik (10) erkannten Verkehrssituation einen Notbremswunsch des Fahrers zu erkennen und daraufhin einen Befehl (HBA1) für eine Notbremsung auszugeben.

3. Bremsassistent nach Anspruch 2, **dadurch gekennzeichnet, daß** die Erkennungseinrichtung (22) dazu ausgebildet ist, mindestens einen Schwellenwert für die Bremsbetätigung durch den Fahrer, bei dessen Überschreitung der Befehl (HBA1) für die Notbremsung ausgegeben wird, in Abhängigkeit von der Verkehrssituation zu variieren.

## Claims

1. Brake assistant for motor vehicles, having a control device (18) for controlling the braking force, a braking force sensor (16) and an evaluation device (14) which accepts signals from a surroundings sensor system (10) and has a triggering function (24) for initiating emergency braking as a function of the traffic situation, wherein the triggering function (24) is active only when the brake is activated by the driver, and the triggering function (24) is designed to check, on the basis of the data from the surroundings sensor system, whether the degree of activation of the brakes by the driver is sufficient to avoid the imminent collision and if a risk of a collision is detected it overrides the braking instructions of the driver and triggers the emergency braking, **characterized in that** the triggering function (24) is designed to abort the emergency braking if the driver releases the brake pedal.

2. Brake assistant according to Claim 1, **characterized by** a detection device (22) which is designed to detect an emergency braking request of the driver and to output an instruction (HBA1) for emergency braking in response as a function of the degree of activation of the brakes by the driver and taking into account the traffic situation detected by the surroundings sensor system (10).

3. Brake assistant according to Claim 2, **characterized in that** the detection device (22) is designed to vary, as a function of the traffic situation, at least one threshold value for the activation of the brakes by the driver, at the upward transgression of which threshold value the instruction (HBA1) for the emergency braking is output.

## Revendications

1. Assistant au freinage pour véhicules automobiles, comprenant un dispositif de commande (18) pour commander la force de freinage, un détecteur de force de freinage (16) et un dispositif d'évaluation (14) qui enregistre les signaux d'un dispositif de détection de l'environnement (10) et qui présente une fonction de déclenchement (24) pour initier un freinage d'urgence en fonction de la situation de trafic, la fonction de déclenchement (24) n'étant active que lorsque les freins sont actionnés par le conducteur et la fonction de déclenchement (24) étant configurée pour vérifier, au moyen des données du dispositif de détection de l'environnement, si l'intensité d'actionnement des freins par le conducteur est suffisante pour écarter le risque de collision imminente et, lorsqu'un risque de collision est détecté, elle prend la priorité sur les instructions de freinage du conducteur et déclenche le freinage d'urgence, **caractérisé en ce que** la fonction de déclenchement (24) est configurée pour interrompre le freinage d'urgence lorsque le conducteur relâche la pédale de frein.

2. Assistant au freinage selon la revendication 1, **caractérisé par** un dispositif de détection (22) qui est configuré pour détecter un souhait de freinage d'urgence par le conducteur en fonction de l'intensité d'actionnement des freins par le conducteur et en considération de la situation de trafic détectée par le dispositif de détection de l'environnement (10) et pour délivrer alors une instruction (HBA1) pour un freinage d'urgence.

3. Assistant au freinage selon la revendication 2, **caractérisé en ce que** le dispositif de détection (22) est configuré pour faire varier en fonction de la situation de trafic au moins une valeur de seuil d'actionnement du frein par le conducteur, dont le dépassement provoque l'émission de l'instruction (HBA1) pour le freinage d'urgence.
